# EUROPEAN PATENT APPLICATION

(11) **EP 4 737 035 A1**
(43) Date of publication of application: **06.05.2026**
(21) Application number: 25211179.4
(22) Date of filing: 24.10.2025
(51) Int. Cl.: B22F 10/28, B22F 10/36, B22F 12/44, B22F 12/90, B29C 64/153, B33Y 10/00, B33Y 30/00, B33Y 50/02, G02B 26/10, B22F 10/368

(54) **APPARATUS AND METHOD FOR ADDITIVELY MANUFACTURING THREE-DIMENSIONAL OBJECTS**

(30) Priority: 30.10.2024 US 202418931669
(71) Applicant: General Electric Company, Cincinnati, Ohio 45215 (US); Concept Laser GmbH, 96215 Lichtenfels (DE)
(72) Inventor: THOMPSON, Brian Thomas, West Chester, 45069 (US); STEELE, William Joseph, West Chester, 45069 (US); ZIMMERMANN, Maik, 96215 Lichtenfels (DE); EICHENBERG, Boris, 96215 Lichtenfels (DE)
(74) Representative: Openshaw & Co.

(57) **Abstract**

A method for additively manufacturing three-dimensional objects includes generating a laser beam with one or more laser beam sources and modulating the laser beam via one or more modulation devices to generate a modulated beam based on a set of one or more defined parameters where the modulated beam is directed onto a build plane. One or more sensor devices detect first data corresponding to one or more measured parameters of the modulated beam and second data corresponding to reflected radiation from the build plane. The set of the one or more defined parameters is modified based on the first data and the second data.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIGS., in which:
FIG. 1 is a schematic diagram of an apparatus for additively manufacturing a three-dimensional object in accordance with an exemplary aspect of the present disclosure.
FIG. 2 is a flow diagram depicting an embodiment of a method of additively manufacturing a three-dimensional object in accordance with various aspects of the present disclosure.
FIG. 3 is a block diagram depicting an example computing system according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (i.e., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using modulation device. A modulation device such as, by way of non-limiting example, a spatial light modulator may be used to control or modulate an intensity, phase, or polarization of a laser beam. An exemplary embodiment of a spatial light modulator is a liquid crystal on silicon (LCoS) device. Liquid crystals are birefringent such that applying a voltage to a cell, pixel, or modulation segment of the modulation device causes a change in a refractive index of the modulation segment. The addressable modulation segments may be actuated or controlled to cause the corresponding modulation segment to be placed into one or more different modulation states. As used herein, the term "modulation state" refers to a particular state of the modulation segment caused by a particular voltage application or alignment of molecules of the modulation segment to change the phase, amplitude and/or polarization state of the laser beam incident of the particular modulation segment.

The inventors of the present disclosure found that the use of a modulation device in combination with light conditioners enables a more dynamically responsive close loop control system(s) for an additive manufacturing system. Observing the modulation device and light conditioner devices with sensors, both the incoming light condition can be evaluated as well as the fusion process itself on the build surface. Feeding this information back into a controller enables dynamic, real-time control on observed conditions in both the condition of emitted light and/or the additive manufacturing process at the build plane. The speed at which adjustments can be made allows for real-time, high fidelity adjustments to the incoming light condition and the fusion process to enable precise control of energy delivered to the build plane resulting in improved build quality and precise microstructural control.

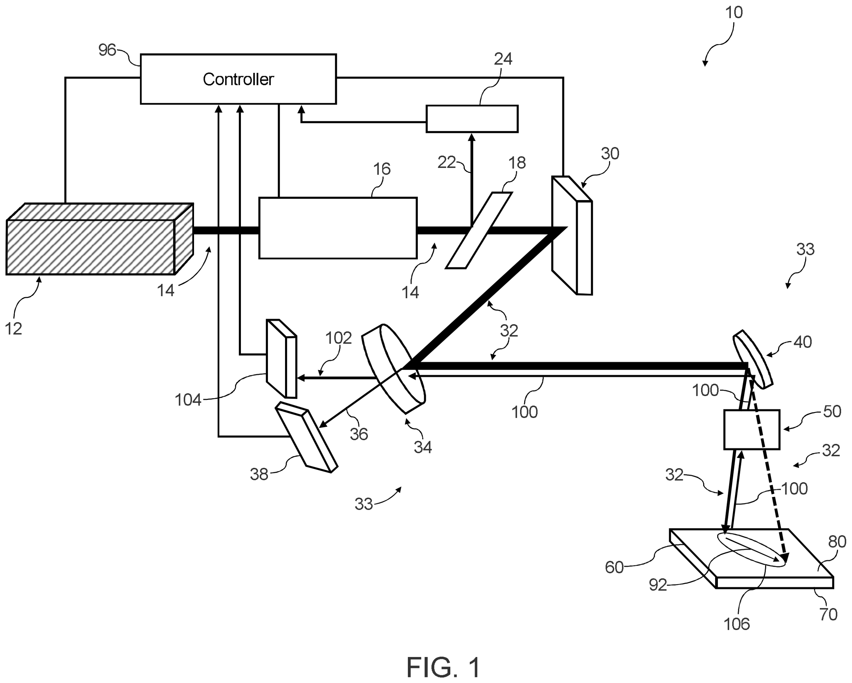

Referring now to FIG. 1, an exemplary embodiment of an apparatus 10 for additively manufacturing three-dimensional objects is illustrated. The apparatus 10 includes several components arranged to effectively generate a laser beam 14 that is manipulated and directed to form a three-dimensional object on a build platform 70. The apparatus 10 may be an additive manufacturing system or an additive manufacturing machine.

In exemplary embodiments, one or more laser beam sources 12 are configured to generate the laser beam 14. The one or more laser beam sources 12 can include various types of lasers suitable for additive manufacturing processes such as, by way of non-limiting example, fiber lasers or CO₂ lasers, depending on the specific application requirements. The generated laser beam 14 is directed downstream to one or more modulation devices 30. The one or more modulation devices 30 are configured to change at least one laser beam parameter of the laser beam 14 to generate or direct a modulated beam 32 toward the build platform 70. This modulation can include changes in amplitude, phase, and/or polarization of the laser beam 14, thereby enabling precise control over the energy delivered to each point on the build platform 70. In exemplary embodiments, the modulation device 30 may include a LCoS device or other type of spatial light modulator such as, by way of non-limiting example, digital micro-mirror devices (DMDs), metamaterial devices, optically addressed modulators, or bragg and kerr cell, liquid mirror devices. Thus, the modulation device 30 is configured to change the amplitude, phase, or polarization of the laser beam 14 or wave front of the laser beam 14. The modulation device 30 is configured to change or modulate at least one laser beam parameter that influences the beam properties of the laser beam 14 emanating from or generated by the laser beam source 12. Therefore, the modulation device 30 is configured to change respective laser beam parameters (e.g., laser beams with (almost) any beam properties) as to place and/or time, including any beam profiles such as, by way of non-limiting example, Gaussian or top hat profiles. By controlling the modulation device 30, the wave front of the laser beam 14 generated by the laser beam source 12 can be changed. Since the wave front significantly determines the beam profile, a changed wave front is typically associated with a changed beam profile of the laser beam 14. A changed wave front or beam profile can also be understood to mean a subdivision of a (single) wave front or a (single) beam profile of the laser beam 14 generated by the laser beam source 12 into several discrete beam profiles or wave fronts. Therefore, a laser beam with a (single) focus area can be generated into several laser beams with one focus area each via the modulation device 30.

In exemplary embodiments, the apparatus 10 may include one or more beam conditioners 16 located downstream of the one or more laser beam sources 12 and upstream of the one or more actively controlled modulation devices 30. The one or more beam conditioners 16 may include one or more optical elements configured to collimate, shape, turn, or condition the laser beam 14 prior to the laser beam 14 becoming incident upon the modulation device 30. In exemplary embodiments, the beam conditioner 16 may include a beam collimator having one or more lenses and/or other optical elements configured to collimate the laser beam 14. Additionally, or in the alternative, the beam conditioner 16 may include a beam homogenizer configured to provide a uniform power distribution across a cross-sectional profile of the laser beam 14.

In the illustrated embodiment, the apparatus 10 also includes one or more splitters 18 located downstream of the beam conditioner 16 and configured to split a measurement beam 22 from the conditioned laser beam 14. The measurement beam 22 may propagate to one or more sensor devices 24. The one or more sensor devices 24 may include a charge-coupled device (e.g., a CCD sensor), an active-pixel sensor (e.g., a CMOS sensor), a quanta image device (e.g., a QIS sensor), or the like. The one or more sensor devices 24 may be configured to provide data pertaining to the conditioned laser beam 14 prior to the laser beam 14 becoming incident on the one or more modulation devices 30.

The apparatus 10 also includes one or more optical devices 33 located downstream of the one or more modulation devices 30 to direct the modulated beam 32 toward a build plane 60. In the illustrated embodiment, the one or more optical devices 33 include one or more dielectric mirrors 34 located downstream of the one or more modulation devices 30 and one or more scanning devices 40. The one or more dielectric mirrors 34 are positioned to direct the modulated beam 32 toward the one or more scanning devices 40. The one or more scanning devices 40 are configured to selectively scan the modulated beam 32 over at least a portion of the build platform 70, such as onto a powder bed 80 residing on the build platform 70 along a scanning path 92. The scanning device 40 can include mirrors or other optical elements that can be precisely controlled to direct the modulated beam 32 at specific locations and scan the modulated beam 32 across the powder bed 80 to melt and fuse powder build material according to the desired object geometry. The scanning device 40 may include any type of scanning device such as, by way or non-limiting example, a Galvanometer scanner, polygon scanner, or gantry system. The scanning device 40 may also include a focusing lens assembly 50 having one or more optical elements, such as lenses, mirrors, or the like, configured to focus respective beam segments of the modulated beam 32 onto the build platform 70. The scanning device 40 may also be a gantry system or structure configured to move the one or more modulation devices 30 with respect to the powder bed 80 and/or the build platform 70. In other words, in exemplary embodiments, by way of non-limiting example, the scanning device 40 may be configured move the one or more modulation devices 30 with respect to the powder bed 80 and/or the build platform 70 such that additional optical elements downstream of the one or more modulation devices 30 to steer the modulated beam 32 across the build platform 70 may be omitted.

In the illustrated embodiment, the one or more dielectric mirrors 34 are also configured to capture at least a portion of the modulated beam 32 and direct the captured portion as a measurement beam 36 to one or more sensor devices 38. The one or more sensor devices 38 may be configured similar to the one or more sensor devices 24. The one or more sensor devices 38 may be configured to provide data pertaining to the modulated beam 32 such as, by way of non-limiting example, the amplitude, phase, or polarization of the modulated beam 32.

The build platform 70 supports the powder bed 80, which contains the build material in powder form that is to be fused by the modulated beam 32. The modulated beam 32 may be scanned or directed across the powder bed via the scanning path 92, controlled by the scanning device 40, to ensure that the modulated beam 32 follows a predetermined path over the surface of the powder bed 80, dictated by the desired geometry of the object being manufactured. In exemplary embodiments, radiation 100 emitted from the build plane travels at least partly in a reverse direction or optical path that the modulated beam 32 traveled to the build plane. In FIG. 1, the radiation 100 that is reflected at the surface of the build plane such as, by way of non-limiting example, thermal radiation 100 emitted due to heating of the powder bed 80, travels in a reverse direction that the modulated beam 32 traveled to the build plane. In other words, the radiation 100 travels from the build plane to the scanning device 40, and from the scanning device 40 towards the one or more dielectric mirrors 34. The one or more dielectric mirrors 34 are also configured to capture at least a portion of the radiation 100 and direct the captured portion as a measurement beam 102 to one or more sensor devices 104. The one or more sensor devices 104 may be configured similar to the one or more sensor devices 24. The one or more sensor devices 104 may be configured to provide data pertaining to the consolidation zone at the build plane such as, by way of non-limiting example, at least one of a temperature or a geometry of a melt pool 106 at the build plane.

In the illustrated embodiment, one or more controllers 96 are communicatively coupled to the one or more laser beam sources 12, the one or more beam conditioners 16, the one or more modulation devices 30, the one or more scanning devices 40, and the one or more sensor devices 24, 38, 104. The one or more controllers 96 are configured to generate control signals to selectively control the activation of the one or more laser beam sources 12, the modulation state of the one or more modulation devices 30, the scanning of the modulated beam 32 over the powder bed 80, and the conditioning of the laser beam 14 via the one or more beam conditioners. The one or more controllers 96 are also configured to receive data from the one or more sensor devices 24, 38, 104 to acquire data detected by the one or more sensor devices 24, 38, 104 and determine whether modifications or a manipulation of one or more sets of defined parameters used to additively manufacture three-dimensional object using the apparatus 10 such as, by way of non-limiting example, laser power, beam shape, and amplitude, phase and polarization for each modulation device 30. In exemplary embodiments, a set of defined parameters may be used by the controller 96 to control the one or more laser beam sources 12, the modulation state of the one or more modulation devices 30, the scanning of the modulated beam 32 over the powder bed 80, and the conditioning of the laser beam 14. However, various factors may impact the additive manufacturing process and quality of the three-dimensional object while the three-dimensional object is being manufactured such as, by way of non-limiting example, temperature, bending, warping, or contamination of components. Embodiments of the present disclosure monitor one or more of the shape of the laser beam 14, the condition of the modulated beam 32, and the radiation 100 reflected by the build plane to make real-time adjustments to the one or more sets of parameters to maintain target temperature distribution(s) and other parameters across the build.

In exemplary embodiments, aspects of the present disclosure provide closed loop monitoring of one or more of the shape of the laser beam 14, the condition of the modulated beam 32, and the radiation 100 reflected by the build plane to control one or more components of the apparatus 10 to create and monitor target temperatures across the build from layer-to-layer and within the same layer. The controller 96 receives first data from the one or more sensor devices 38 corresponding to the modulated beam 32 to determine the condition of the modulated beam 32 such as, by way of non-limiting example, the amplitude, phase and polarization for the modulated beam 32. The controller 96 receives second data from the one or more sensor devices 104 corresponding to the radiation 100 reflected from the build plane such as, by way of non-limiting example, a temperature, temperature distribution, or shape of the melt pool 106. The controller 96 receives third data from at least one of the one or more sensor devices 24 or the one or more sensor devices 38 corresponding to the shape, position, or condition of the laser beam 14 after being conditioned by the one or more beam conditioners 16. The third data with respect to the conditioned laser beam 14 may be acquired prior to the laser beam 14 becoming incident on the one or more modulation devices 30 or be acquired downstream of the one or more modulation devices 30 by setting the one or modulation devices 30 to output an unmodulated laser beam 14 (e.g., setting the one or more modulation devices 30 to a neutral state or omitting a control signal to the one or more modulation devices 30 that would otherwise cause the one or more modulation devices 30 to modulate the incident laser beam 14).

In exemplary embodiments, the controller 96 assesses the data received from one or more of the sensor devices 24, 38, 104 and determines or calculates, in real time, adjustments to the defined set of parameters such as, by way of non-limiting example, laser power, beam shape, and/or amplitude, phase and polarization for each of the one or more modulation devices 30. Based on the determined or calculated adjustments to the defined set of parameters, the controller 96 generates one or more control signals to manipulate or modify one or parameters used by the one or more beam conditioners 16 and/or the one or more modulation devices 30. Embodiments of the present disclosure enable a correction or modification to a predicted beam parameter (e.g., spot size, beam shape, beam intensity, etc.) in process to compensate for machine degeneration due to factors such as temperature, bending, warping, or contamination of components. Further, material microstructures can be tailored or otherwise controlled in real time within the bounds of the parameter window controlled by the controller 96 based on data from the build surface, the conditioned laser beam, 14, and/or the modulated beam 32 received from one or more of the sensor devices 24, 38, 104.

In the illustrated embodiment, the one or more sensor devices 24 are used to detect data corresponding to the conditioned laser beam 14 downstream of the beam conditioner 16 prior to the conditioned laser beam 14 becoming incident on the one or more modulation devices 30. However, it should be understood that such data may, additionally or alternatively, be acquired by the one or more sensor devices 38 such that the splitter 18 and the one or more sensor devices 24 may be optional. In such an embodiment, data corresponding to the conditioned laser beam 14 can be observed downstream of the one or modulation devices 30 (e.g., via the one or more sensor devices 38) by using the one or modulation devices 30 as a mirror (e.g., no phase shift) such that an unmodulated laser beam 14 directed downstream by the one or modulation devices 30 to the one or more dielectric mirrors 34 may be captured by the one or more sensor devices 38 to assess the condition of the conditioned laser beam 14.

In operation, the one or more laser beam sources 12 generates the laser beam 14 which is directed downstream to the one or more beam conditioners 16. The generated laser beam 14 and the conditioning of the laser beam 14 by the one or more beam conditioners 16 may be controlled by the one or more controllers 96 pursuant to one or more sets of predefined parameters. In exemplary embodiments, data corresponding to the conditioned laser beam 14 is determined (e.g., via the one or more sensor devices 24) and is provided to the controller 96. The conditioned laser beam 14 travels downstream to the one or more modulation devices 30 where the one or more modulation devices 30 modulate the laser beam 14 to produce the modulated beam 32 having a desired intensity, phase, and/or polarization based on the one or more sets of predefined parameters. As the modulated beam 32 travels downstream toward the build plane, data corresponding to the modulated beam 32 is detected by the one or more sensor devices 38 such as, by way of non-limiting example, the intensity, phase, and/or polarization of the modulated beam 32, and is provided to the controller 96. The modulated beam 32 is directed onto the powder bed 80 via the one or more scanning devices 40, and data corresponding to the melt pool 106 is detected by the one or more sensor devices 104 (e.g., via the reflected radiation 100 from the build plane) and provided to the controller 96. The controller 96 assesses the data received from the one or more sensor devices 24, 38, 104 and adjusts or modifies the one or more sets of defined parameters in response to changing conditions in the melt pool 106, changes in beam characteristics, changes in component degeneration, or other build factors to maintain a target temperature distribution and other build parameters across the build. The controller 96 may modify the conditioning of the laser beam 14 by the one or more beam conditioners 16, modify or improve the processing time of the one or modulation devices 30, modify the modulation states of the one or more modulation devices as to beam intensity, phase, or polarization, or adjust laser power for the laser beam 14.

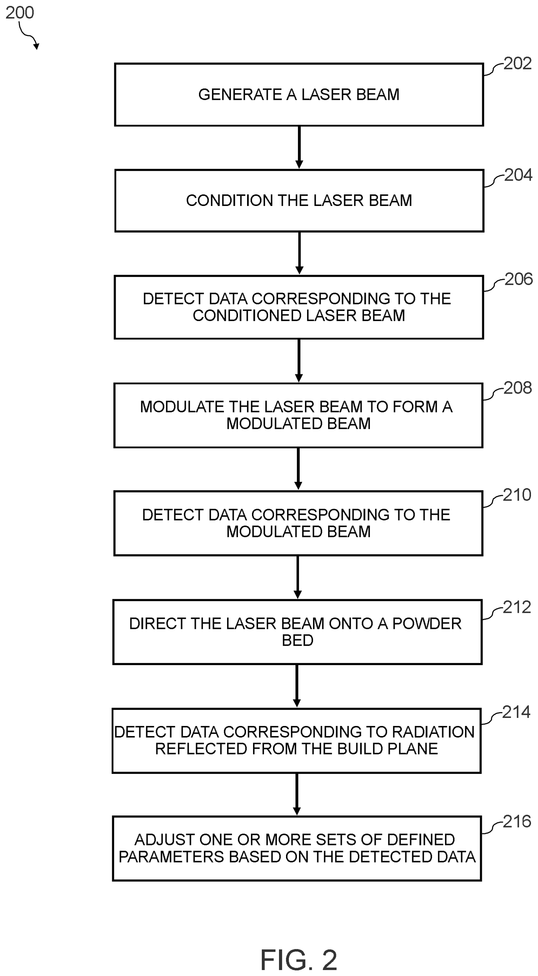

Referring now to FIG. 2, a flow diagram is presented depicting an exemplary embodiment of a method 200 for additively manufacturing three-dimensional objects in accordance with various aspects of the present disclosure. The method 200 illustrates a series of steps designed to control the characteristics of a laser beam in a manner that optimizes the additive manufacturing process, thereby enhancing the quality and precision of the manufactured objects.

A step 202 of the method 200 involves generating the laser beam 14. This step is performed by the one or more laser beam sources 12, which is configured to produce a coherent beam of light suitable for processing materials in an additive manufacturing environment. Following the generation of the laser beam 14, the method 200 proceeds to step 204, where the laser beam is conditioned by one or more beam conditioners 16. At step 206, the method 200 includes detecting data corresponding to the conditioned laser beam 14. At step 208, the method 200 includes modulating the conditioned laser beam 14 to produce the modulated beam 32 using the one or more modulation devices 30. At step 210, the method 200 includes detecting data corresponding to the modulated beam 32. At step 212, the method 200 includes directing the modulated beam 32 onto the powder bed 80. At step 214, the method 200 includes detecting data corresponding to the build plane such as, by way of non-limiting example, temperature data corresponding to the melt pool 106 via the radiation 100 reflected by the build plane. At step 216, the method 200 includes modifying or manipulating, via the controller 96, one or more sets of the defined parameters used to generate the laser beam 14, condition the laser beam 14, or modulate the laser beam 14 to maintain a target temperature distribution and other build parameters across the build.

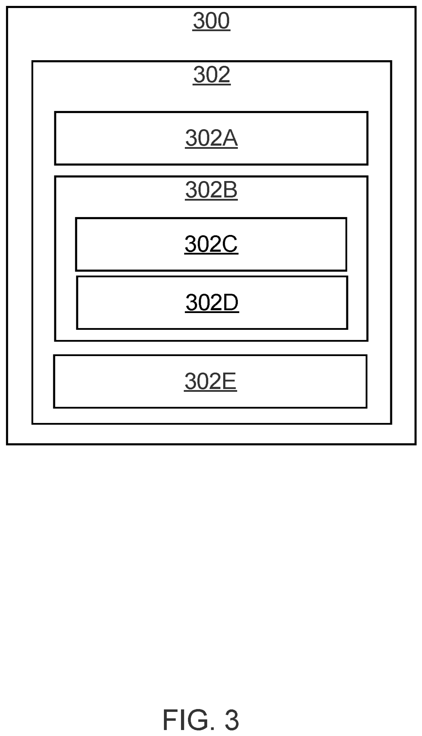

FIG. 3 provides an example computing system 300 according to example embodiments of the present disclosure. The computing devices or elements described herein, such as the controller 96 (FIGS. 1-5), may include various components and perform various functions of the computing system 300 described below, for example.

As shown in FIG. 3, the computing system 300 can include one or more computing device(s) 302. The computing device(s) 302 can include one or more processor(s) 302A and one or more memory device(s) 302B. The one or more processor(s) 302A can include any suitable processing device, such as a microprocessor, microcontroller, integrated circuit, logic device, and/or other suitable processing device. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A, including computer-readable instructions 302C that can be executed by the one or more processor(s) 302A. The computer-readable instructions 302C can be any set of instructions that when executed by the one or more processor(s) 302A, cause the one or more processor(s) 302A to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as generating the laser beam 14, conditioning the laser beam 14, controlling the modulation states of the modulation devices 30, scanning of the modulated beam 32 over the powder bed 80 by the scanning device 40, acquiring and assessing data received from the one or more sensor devices 24, 38, 104, and determining modifications or manipulations to the one or more defined parameters for controlling one or more of the laser beam sources 12, the beam conditioners 16, the modulation devices 30, and the scanning device 40. The computer-readable instructions 302C can be software written in any suitable programming language or can be implemented in hardware. Additionally, and/or alternatively, the computer-readable instructions 302C can be executed in logically and/or virtually separate threads on processor(s) 302A. The memory device(s) 302B can further store data 302D that can be accessed by the processor(s) 302A. For example, the data 302D can include models, lookup tables, databases, etc. The data 302D may also include data corresponding to one or more measured parameters of the modulated beam 32 (e.g., detected by the one or more sensor device 38), data corresponding to reflected radiation from the build plane (e.g., detected by the one or more sensor devices 104), data corresponding to one or more measured parameters of the laser beam 14 after being conditioned by the one or more beam conditioners 16 (e.g., detected by the one or more sensor devices 24 and/or 38), and/or data corresponding to a set of one or more defined parameters for forming or generating the modulated beam 32.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

Thus, in exemplary embodiments, the apparatus includes one or more laser beam sources coupled with one or more beam conditioners that can collimate, shape, turn, or otherwise condition the laser beam prior to being directed to one or modulation devices. The laser beam sources, beam conditioners, and modulation devices are actively controlled by a controller using a set of predefined parameters. Radiation reflected from the build plane is captured through dielectric mirrors or other similar devices to actively monitor the melt pool and surrounding build conditions. The acquired information is provided to the controller to manipulate the parameter sets in response to changing conditions in the melt pool. Alternatively or additionally, information corresponding to the laser beam without being modified by the modulation devices can be observed downstream of the modulation devices by using the modulation device as a mirror or transmitter (e.g., no phase shift). The parameter sets are manipulated such that the optimum geometry, temperature, or other physical conditions of the melt pool and build area are achieved. Additionally or alternatively, the shape or condition of the laser beam incoming to the modulation device or the modulated beam provided by the modulation device is monitored via sensor devices that enable the dynamic adjustment of the condition of the beam in real time based upon the real time monitoring of the process. The monitoring of the beam information can also refine the calculations and control of the modulation devices to improve its processing time.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
An apparatus for additively manufacturing three-dimensional objects, the apparatus comprising: one or more laser beam sources configured to generate a laser beam; one or more modulation devices disposed downstream of the one or more laser beam sources and configured to receive the laser beam and generate a modulated beam based on a set of one or more defined parameters; one or more optical devices disposed downstream of the one or more modulation devices and configured to direct the modulated beam onto a build plane; one or more sensor devices configured to detect: first data corresponding one or more measured parameters of the modulated beam; and second data corresponding to reflected radiation from the build plane; and a controller configured to manipulate the set of the one or more defined parameters based on the first data and the second data.

The apparatus of the previous clause, wherein at least one sensor device of the one or more sensor devices is located downstream from the one or more modulation devices.

The apparatus of any previous clause, further comprising one or more beam conditioners disposed upstream of the one or more modulation devices.

The apparatus of any previous clause, wherein the controller is configured to generate at least one control signal to control the one or more beam conditioners.

The apparatus of any previous clause, wherein at least one sensor device of the one or more sensor devices is configured to detect third data corresponding to one or more measured properties of the laser beam after the laser beam is conditioned by the one or more beam conditioners.

The apparatus of any previous clause, wherein the third data is detected upstream of the one or more modulation devices.

The apparatus of any previous clause, wherein the controller is configured to manipulate the set of the one or more defined parameters based on the third data.

The apparatus of any previous clause, wherein the one or more measured parameters comprise at least one of a phase, an amplitude, or a polarization of the modulated beam.

The apparatus of any previous clause, wherein at least one sensor device of the one or more sensor devices is configured to detect at least one of a temperature or a geometry of a melt pool at the build plane.

The apparatus of any previous clause, wherein the set of the one or more defined parameters comprise at least one of a phase, an amplitude, or a polarization of the modulated beam.

The apparatus of any previous clause, wherein the controller is configured to generate at least one control signal to control the modulation device.

The apparatus of any previous clause, further comprising one or more dielectric mirrors disposed downstream of the modulation device.

The apparatus of any previous clause, wherein the controller is configured to control the one or more modulation devices to receive the laser beam and direct the laser beam downstream as unmodulated, and wherein the one or more sensor devices are configured to detect the third data from the laser beam being unmodulated by the one or more modulation devices.

The apparatus of any previous clause, wherein the one or more optical devices comprise at least one scanning device configured to selectively scan the laser beam onto the build plane.

A method for additively manufacturing three-dimensional objects, the method comprising: generating a laser beam with one or more laser beam sources; modulating the laser beam via one or more modulation devices to generate a modulated beam based on a set of one or more defined parameters; directing the modulated beam onto a build plane; detecting, via one or more sensor devices: first data corresponding one or more measured parameters of the modulated beam; and second data corresponding to reflected radiation from the build plane; and modifying the set of the one or more defined parameters based on the first data and the second data.

The method of any previous clause, further comprising conditioning the laser beam via one or more beam conditioners located upstream of the one or more modulation devices.

The method of any previous clause, further comprising detecting, via the one or more sensor devices, third data corresponding to one or more measured properties of the laser beam after the laser beam is conditioned by the one or more beam conditioners.

The method of any previous clause, further comprising detecting the third data upstream of the one or more modulation devices.

The method of any previous clause, further comprising modifying the set of the one or more defined parameters based on the third data.

The method of any previous clause, further comprising detecting the third data downstream of the one or more modulation devices.

The method of any previous clause, further comprising: conditioning the laser beam via one or more beam conditioners disposed upstream of the one or more modulation devices; controlling the one or more modulation devices to receive the laser beam after being conditioned via the one or more beam conditioners and direct the laser beam downstream as unmodulated; and detecting, downstream of the one or more modulation devices via the one or more sensor devices, third data corresponding to one or more measured properties of the laser beam after the laser beam is conditioned by the one or more beam conditioners and unmodulated by the one or more modulation devices.

The method of any previous clause, wherein detecting the second data corresponding to the reflected radiation from the build plane comprises detecting at least one of a temperature or a geometry of a melt pool at the build plane.

The method of any previous clause, further comprising controlling the one or more modulation devices to receive the laser beam and direct the laser beam downstream as unmodulated by the one or more modulation devices.

The method of any previous clause, further comprising generating, via one or more controllers, at least one control signal to control the modulation device.

The method of any previous clause, further comprising generating, via one or more controllers, at least one control signal to control the one or more beam conditioners.

The method of any previous clause, further comprising: conditioning the laser beam via one or more beam conditioners located upstream of the one or more modulation devices; and detecting, upstream of the one or more modulation devices via the one or more sensor devices, third data corresponding to one or more measured properties of the laser beam after the laser beam is conditioned by the one or more beam conditioners.

The method of any previous clause, further comprising: conditioning the laser beam via one or more beam conditioners located upstream of the one or more modulation devices; and splitting a measurement beam from the laser beam after being conditioned by the one or more beam conditioners, the measurement beam propagating to the one or more sensor devices

A non-transitory computer-readable medium comprising computer-executable instructions, which, when executed by a processor associated with an additive manufacturing machine, cause the processor to perform a method comprising: generating a laser beam with one or more laser beam sources; modulating the laser beam via one or more modulation devices to generate a modulated beam based on a set of one or more defined parameters; directing the modulated beam onto a build plane; detecting, via one or more sensor devices: first data corresponding one or more measured parameters of the modulated beam; and second data corresponding to reflected radiation from the build plane; and modifying the set of the one or more defined parameters based on the first data and the second data.

The non-transitory computer-readable medium of any previous clause, wherein the computer-executable instructions, which when executed by the processor, causes the processor to perform the method comprising: conditioning the laser beam via one or more beam conditioners located upstream of the one or more modulation devices.

The non-transitory computer-readable medium of any previous clause, wherein the computer-executable instructions, which when executed by the processor, causes the processor to perform the method comprising: detecting, via the one or more sensor devices, third data corresponding to one or more measured properties of the laser beam after the laser beam is conditioned by the one or more beam conditioners.

The non-transitory computer-readable medium of any previous clause, wherein the computer-executable instructions, which when executed by the processor, causes the processor to perform the method comprising: modifying the set of the one or more defined parameters based on the third data.

The non-transitory computer-readable medium of any previous clause, wherein the computer-executable instructions, which when executed by the processor, causes the processor to perform the method, wherein: detecting the second data corresponding to the reflected radiation from the build plane comprises detecting at least one of a temperature or a geometry of a melt pool at the build plane.

The non-transitory computer-readable medium of any previous clause, wherein the computer-executable instructions, which when executed by the processor, causes the processor to perform the method comprising: controlling the one or more modulation devices to receive the laser beam and direct the laser beam downstream as unmodulated, and wherein detecting the third data comprises detecting the third data from the laser beam being unmodulated by the one or more modulation devices.

An apparatus for additively manufacturing three-dimensional objects, the apparatus comprising: one or more laser beam sources configured to generate a laser beam; one or more modulation devices disposed downstream of the one or more laser beam sources and configured to receive the laser beam and generate a modulated beam based for directing onto a build plane based on a set of one or more defined parameters; one or more beam conditioners disposed upstream of the one or more modulation devices and configured to condition the laser beam; one or more sensor devices configured to detect: first data corresponding to one or more measured parameters of the modulated beam; and second data corresponding to one or more measured properties of the laser beam after the laser beam is conditioned by the one or more beam conditioners; and a controller configured to manipulate the set of the one or more defined parameters based on the first data and the second data.

An apparatus for additively manufacturing three-dimensional objects, the apparatus comprising: one or more laser beam sources configured to generate a laser beam; one or more modulation devices disposed downstream of the one or more laser beam sources and configured to receive the laser beam and generate a modulated beam based for directing onto a build plane based on a set of one or more defined parameters; one or more beam conditioners disposed upstream of the one or more modulation devices, the one or more beam conditioners configured to condition the laser beam; one or more sensor devices configured to detect: first data corresponding to one or more measured properties of the laser beam after the laser beam is conditioned by the one or more beam conditioners; and second data corresponding to reflected radiation from the build plane; and a controller configured to manipulate the set of the one or more defined parameters based on the first data and the second data.

The method of any preceding clause, wherein detecting the first data corresponding to the one or more measured parameters of the modulated beam comprises detecting at least one of a phase, an amplitude, or a polarization of the modulated beam.

The method of any preceding clause, wherein modifying the set of the one or more defined parameters based on the first data and the second data comprises controlling the one or more modulation devices to control at least one of a phase, an amplitude, or a polarization of the modulated beam.

The method of any preceding clause, further comprising generating, via a controller, at least one control signal to control the one or more modulation devices based on the first data and the second data.

## Claims

1. A method for additively manufacturing three-dimensional objects, the method comprising:
generating a laser beam with one or more laser beam sources;
modulating the laser beam via one or more modulation devices to generate a modulated beam based on a set of one or more defined parameters;
directing the modulated beam onto a build plane;
detecting, via one or more sensor devices:
first data corresponding to one or more measured parameters of the modulated beam; and
second data corresponding to reflected radiation from the build plane; and
modifying the set of the one or more defined parameters based on the first data and the second data.

2. The method of claim 1, further comprising conditioning the laser beam via one or more beam conditioners located upstream of the one or more modulation devices.

3. The method of claim 2, further comprising detecting, via the one or more sensor devices, third data corresponding to one or more measured properties of the laser beam after the laser beam is conditioned by the one or more beam conditioners; optionally further comprising modifying the set of the one or more defined parameters based on the third data.

4. The method of any preceding claim, wherein detecting the second data corresponding to the reflected radiation from the build plane comprises detecting at least one of a temperature or a geometry of a melt pool at the build plane.

5. The method of any preceding claim, further comprising:
conditioning the laser beam via one or more beam conditioners disposed upstream of the one or more modulation devices;
controlling the one or more modulation devices to receive the laser beam after being conditioned via the one or more beam conditioners and direct the laser beam downstream as unmodulated; and
detecting, downstream of the one or more modulation devices via the one or more sensor devices, third data corresponding to one or more measured properties of the laser beam after the laser beam is conditioned by the one or more beam conditioners and unmodulated by the one or more modulation devices.

6. The method of any preceding claim, wherein detecting the first data corresponding to the one or more measured parameters of the modulated beam comprises detecting at least one of a phase, an amplitude, or a polarization of the modulated beam.

7. The method of any preceding claim, wherein modifying the set of the one or more defined parameters based on the first data and the second data comprises controlling the one or more modulation devices to control at least one of a phase, an amplitude, or a polarization of the modulated beam; and/or further comprising generating, via a controller, at least one control signal to control the one or more modulation devices based on the first data and the second data.

8. The method of any preceding claim, further comprising:
conditioning the laser beam via one or more beam conditioners located upstream of the one or more modulation devices; and
detecting, upstream of the one or more modulation devices via the one or more sensor devices, third data corresponding to one or more measured properties of the laser beam after the laser beam is conditioned by the one or more beam conditioners; and/or
splitting a measurement beam from the laser beam after being conditioned by the one or more beam conditioners, the measurement beam propagating to the one or more sensor devices.

9. An apparatus for additively manufacturing three-dimensional objects, the apparatus comprising:
one or more laser beam sources configured to generate a laser beam;
one or more modulation devices disposed downstream of the one or more laser beam sources and configured to receive the laser beam and generate a modulated beam based on a set of one or more defined parameters;
one or more optical devices disposed downstream of the one or more modulation devices and configured to direct the modulated beam onto a build plane;
one or more sensor devices configured to detect:
first data corresponding to one or more measured parameters of the modulated beam; and
second data corresponding to reflected radiation from the build plane; and
a controller configured to manipulate the set of the one or more defined parameters based on the first data and the second data.

10. The apparatus of claim 9, further comprising one or more beam conditioners disposed upstream of the one or more modulation devices.

11. The apparatus of claim 10, wherein at least one sensor device of the one or more sensor devices is configured to detect third data corresponding to one or more measured properties of the laser beam after the laser beam is conditioned by the one or more beam conditioners; optionally wherein the controller is configured to manipulate the set of the one or more defined parameters based on the third data.

12. The apparatus of any one of claims 9 to 11, further comprising one or more beam conditioners disposed upstream of the one or more modulation devices, and wherein at least one sensor device of the one or more sensor devices is configured to detect third data corresponding to one or more measured properties of the laser beam after the laser beam is conditioned by the one or more beam conditioners, and wherein the controller is configured to control the one or more modulation devices to receive the laser beam and direct the laser beam downstream as unmodulated, and wherein the at least one sensor device is configured to detect the third data from the laser beam being unmodulated by the one or more modulation devices.

13. The apparatus of any one of claims 9 to 12, further comprising one or more dielectric mirrors disposed downstream of the one or more modulation devices.

14. A non-transitory computer-readable medium comprising computer-executable instructions, which, when executed by a processor associated with an additive manufacturing machine, cause the processor to perform a method comprising:
generating a laser beam with one or more laser beam sources;
modulating the laser beam via one or more modulation devices to generate a modulated beam based on a set of one or more defined parameters;
directing the modulated beam onto a build plane;
detecting, via one or more sensor devices:
first data corresponding one or more measured parameters of the modulated beam; and
second data corresponding to reflected radiation from the build plane; and
modifying the set of the one or more defined parameters based on the first data and the second data.

15. The non-transitory computer-readable medium of claim 14, wherein the computer-executable instructions, which when executed by the processor, causes the processor to perform the method comprising:
conditioning the laser beam via one or more beam conditioners located upstream of the one or more modulation devices; and
detecting, via the one or more sensor devices, third data corresponding to one or measured parameters of the laser beam after being conditioned by the one or more beam conditioners; and/or wherein the computer-executable instructions, which when executed by the processor, causes the processor to perform the method comprising:
modifying the set of the one or more defined parameters based on the third data.
